# EUROPÄISCHE PATENTSCHRIFT

(11) **EP 0 859 179 B1**
(45) Veröffentlichungstag und Bekanntmachung des Hinweises auf die Patenterteilung: **12.06.2002**
(21) Anmeldenummer: 98100351.0
(22) Anmeldetag: 12.01.1998
(51) Int. Cl.: F16K 51/00

(54) **Kryoventil**
Cryogenic valve
Soupape cryogénique

(30) Priorität: 15.02.1997 DE 19705850
(43) Veröffentlichungstag der Anmeldung: 19.08.1998
(73) Patentinhaber: Astrium GmbH, 81663 München (DE)
(72) Erfinder: Voggenreiter, Heinz, Dipl.-Ing., 81549 München (DE); Seidel, Albert, Dipl.-Ing., 85635 Höhenkirchen-Siegertsbrunn (DE)
(74) Vertreter: Ulrich, Thomas

(56) Entgegenhaltungen:
- DE-A- 2 827 527
- US-A- 5 158 106
- DATABASE WPI Section Ch, Week 7623 Derwent Publications Ltd., London, GB; Class M27, AN 76-43004X XP002086340 & JP 51 047516 A (DAIDO STEEL CO LTD) , 23. April 1976

## Beschreibung

Die Erfindung betrifft ein Kryoventil mit mindestens einer Dichtelementepaarung, gemäß dem Oberbegriff des Patentanspruches 1.

Ein Kryoventil mit Absperr- und Regelfunktion ist beispielsweise aus der DE-OS 28 27 527 bekannt.

Ventile für kryogene, d.h. tiefkalte Medien wie z.B. LN₂, LH₂ und LHe haben generell das Problem, daß alle bis dato eingesetzten Sitz- und Stößelwerkstoffe bei den in diesen Fällen auftretenden Betriebstemperaturen zwischen 2 K und 80 K sehr hart sind. Das trifft sowohl für metallische als auch für nichtmetallische Werkstoffe zu. Die bei Zimmertemperatur gegebene Elastizität nichtmetallischer Werkstoffe (z.B. Vespel) verschwindet dann fast vollständig. Dieses Verhalten macht es besonders schwierig, strenge Dichtheitsanforderungen zu erfüllen, was dann - wenn überhaupt - nur noch mit großem konstruktivem und entwicklungstechnischem Aufwand gelingt. Ein Hauptproblem dabei sind Abrieb- und sonstige Partikel zwischen den Dichtflächen. Aber auch fertigungsbedingte Abweichungen von der Soll-Geometrie können bei mangelnder Elastizität kaum mehr ausgeglichen werden.

Angesichts dieser Probleme besteht die Aufgabe der Erfindung darin, ein Kryoventil mit Absperrfunktion, d.h. mit mindestens einer Dichtelementepaarung, zu schaffen, welches sich bei üblichem konstruktivem und fertigungstechnischem Aufwand durch eine besonders hohe Leckdichtheit auch bei extrem niedrigen Temperaturen auszeichnet.

Diese Aufgabe wird durch die im Anspruch 1 gekennzeichneten Merkmale gelöst, in Verbindung mit den gattungsbildenden Merkmalen in dessen Oberbegriff.

Die erfinderische Lösung besteht darin, bei jeder Dichtelementepaarung mindestens ein Dichtelement aus linerar superelastischem Werkstoff zu verwenden. Bei diesen LSE-Werkstoffen handelt es sich um plastisch kaltdeformierte Formgedächtnislegierungen, welche auch bei sehr tiefen Temperaturen noch eine hohe lineare Elastizität bis über 4 %, d.h. eine hohe elastische Verformungsfähigkeit, aufweisen. Somit sind die Sitzflächen (Dichtflächen) in der Lage, fertigungs-, verschleiß- und verschmutzungsbedingte Oberflächenunebenheiten auszugleichen. Durch die relativ starke Kaltverformung ist diesen Werkstoffen der Formgedächtniseffekt, d.h. der temperaturbedingte Umschlag Martensit/Austenit und umgekehrt, genommen, so daß sie sich wie "normale", nur eben besonders elastische Metallegierungen verhalten.

Der Unteranspruch 2 kennzeichnet eine bevorzugte Ausführungsform des Kryoventils nach dem Hauptanspruch.

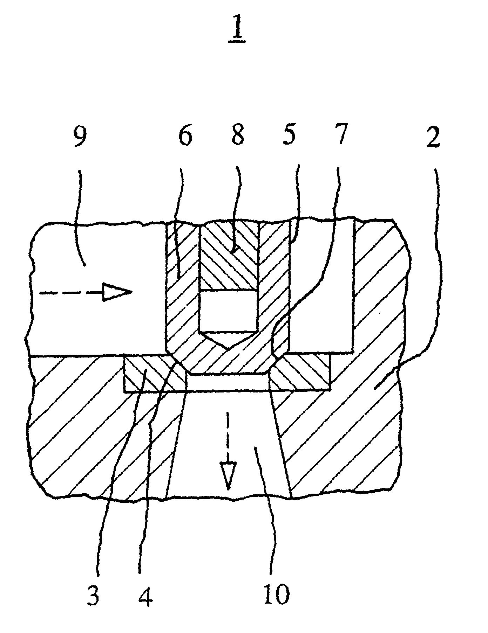

Die Erfindung wird anschließend anhand der Figur noch näher erläutert. Diese zeigt in vereinfachter, nicht maßstäblicher Darstellung einen Teilschnitt durch ein Kryoventil im Sitzbereich.

Mit Hilfe des Kryoventiles 1 wird ein tiefkaltes Medium, z.B. LHe, weitestgehend leckagefrei abgesperrt, bedarfsweise freigegeben, und dabei ggf. die Durchflußmenge geregelt bzw. gesteuert. Die eigentlichen Funktionselemente sind der fest in das Gehäuse 2 integrierte Sitz 3 und der axial, d.h. hier vertikal, bewegliche Stößel 5, welcher aus einem Kern 8 und einem fest mit diesem verbundenen Mantel 6 besteht. Der Sitz 3 und der Stößel 5 weisen je eine feinbearbeitete, kegelige Sitzfläche 4 und 7 auf, welche ohne zusätzliche Dichtelemente bzw. Beschichtungen ausgezeichnet dichten. Die Sitzflächen könnten selbstverständlich auch anders geformt sein, z.B. kugelig, eben, geknickt, gestuft usw. wobei aber immer eine flächige Berührung in der Absperrstellung gegeben sein sollte.

In der Figur ist nur diese Absperrstellung wiedergegeben, wobei die Strömungsrichtung nach Freigabe im Zuströmkanal 9 und im Abströmkanal 10 in Form gestrichtelter Pfeile angedeutet ist.

Die Erfindung liegt wohlgemerkt nicht in dieser Anordnung als solcher sondern in der Materialauswahl bezüglich der Dichtelemente. Es ist so, daß entweder der Sitz 3 einschließlich seiner Sitzfläche 4 oder der Mantel 6 des Stößels 5 einschließlich seiner Sitzfläche 7 oder aber beide Elemente 3 und 6 jeweils aus linear superelastischem Werkstoff, d.h. aus einer kaltverformten und somit gefügestabilisierten Formgedächtnislegierung bestehen. Bekannt sind derzeit Nikkel-Titan- und Kupfer-Basislegierungen mit der gewünschten Tieftemperaturelastizität. Es ist leicht möglich, daß in naher Zukunft noch andere LSE-Werkstoffe gefunden werden.

Speziell die NiTi-Basislegierungen zeigen eine lineare elastische Verformung bis maximal 4,5 % in einem Temperaturbereicn von etwa -150° C bis +150° C.

Die erforderliche Kaltverformung der bekannten LSE-Werkstoffe liegt etwa bei 10 % bis 30 % und erfolgt beispielsweise durch Schmieden, Walzen, Ziehen usw., wobei die Zahlenwerte die bleibende, plastische Deformation angeben. Die eigentliche Wirkung der Kaltverformung besteht darin, Fehlstellen im martensitischen Kristallgitter der Legierung zu erzeugen, welche einen "Umschlag" hin zur austenitischen Gitterstruktur bleibend verhindern und die elastische Gitterverformung erleichtem.

Wenn beide Dichtelemente einer Paarung aus LSE-Werkstoff bestehen, kann es sinnvoll sein, Legierungen mit verschiedener Basis zu paaren, um "Freßerscheinungen" vorzubeugen.

## Patentansprüche

1. Kryoventil mit mindestens einer Dichtelementepaarung (3, 5), vorzugsweise einer Paarung bestehend aus Sitz und Stößel, deren Sitzflächen (4, 7) sich in Absperrstellung dichtend berühren, **dadurch gekennzeichnet, daß** mindestens ein Dichtelement der Paarung (3, 5) aus einer linear superelastischen Formgedächtnislegierung besteht, welche durch plastische Kaltverformung im martensitischen Gefügezustand stabilisiert ist, d.h. keine temperaturabhängige Gefügeumwandlung zu Austenit, also keinen Formgedächtniseffekt mehr zeigt.

2. Kryoventil nach Anspruch 1, **dadurch gekennzeichnet, daß** mindestens eine linear superelastische Formgedächtnislegierung auf NiTi-Basis oder Cu-Basis mit einem Kaltverformungsgrad von 10 % bis 30 % verwendet wird.

## Claims

1. Cryovalve having at least one sealing element pairing (3, 5), preferably a pairing consisting of seat and plunger, the seating faces (4, 7) of which are in sealing contact with each other in the shut-off position, **characterised in that** at least one sealing element of the pairing (3, 5) consists of a linearly superelastic shape-memory alloy that has been stabilised in the martensitic structural state by plastic cold-working, that is to say, that no longer undergoes a temperature-dependent structural transformation to austenite, and therefore no longer exhibits a shape-memory effect.

2. Cryovalve according to claim 1, **characterised in that** at least one linearly superelastic shape-memory alloy based on NiTi or Cu having a degree of cold-working of from 10 % to 30 % is used.

## Revendications

1. Soupape cryogénique avec au moins un appariement d'éléments d'étanchéité (3, 5), de préférence un appariement constitué d'un logement et d'une tige-poussoir, dont les surfaces d'appui (4, 7) sont en contact étroit, en position de fermeture, **caractérisée en ce qu'**au moins un élément d'étanchéité de l'appariement (3, 5) est constitué d'un élément à mémoire de forme, faisant preuve d'une super-élasticité linéaire, cette dernière étant stabilisée par déformation plastique à froid à l'état de structure martensitique, c'est à dire qu'elle ne fait plus preuve d'aucune transformation de structure par rapport à l'austénite, donc d'aucun effet de mémoire de forme.

2. Soupape cryogénique selon la revendication 1, **caractérisée en ce qu'**on utilise au moins un alliage à mémoire de forme à base de NiTi ou de Cu, faisant preuve d'une super-élasticité linéaire, avec un degré de déformation à froid situé entre 10 % et 30 %.
